Europäisches Patentamt

European Patent Office

Office européen des brevets

(19)

(11) Veröffentlichungsnummer : **0 413 055 B1**

(12) # EUROPÄISCHE PATENTSCHRIFT

(45) Veröffentlichungstag der Patentschrift :
**17.06.92 Patentblatt 92/25**

(51) Int. Cl.$^5$ : **A01M 21/04, A01M 15/00**

(21) Anmeldenummer : **89115292.8**

(22) Anmeldetag : **18.08.89**

(54) **Unkrautvernichter.**

(43) Veröffentlichungstag der Anmeldung :
**20.02.91 Patentblatt 91/08**

(45) Bekanntmachung des Hinweises auf die
Patenterteilung :
**17.06.92 Patentblatt 92/25**

(84) Benannte Vertragsstaaten :
**AT BE CH DE ES FR GB IT LI NL SE**

(56) Entgegenhaltungen :
**CH-A- 663 319
DE-C- 106 188
DE-C- 116 378
FR-A- 2 586 339
US-A- 3 945 370
LANDTECHNIK. vol. 38, no. 3, März 1983, HAN-
NOVER DE Seiten 105 - 107; M.HOFFMANN:
"Abflammtechnik mit neuen Geräten"**

(73) Patentinhaber : **STEINEL Entwicklungs-GmbH
für Elektrotechnik und Elektronik
Tannenweg 10
W-4840 Rheda-Wiedenbrück (DE)**

(72) Erfinder : **Steinel, Heinrich W.
Röntgenweg 8
W-8939 Bad Wörishofen (DE)**
Erfinder : **Schulze-Fröhlich, D. F., Dr.
Niggenkamp 17
W-4836 Herzebrock (DE)**
Erfinder : **Mersch, Fritz
Tannenweg 17
W-4840 Rheda-Wiedenbrück (DE)**

(74) Vertreter : **Patentanwälte Grünecker,
Kinkeldey, Stockmair & Partner
Maximilianstrasse 58
W-8000 München 22 (DE)**

## Beschreibung

Die Erfindung betrifft einen mit Wärmestrahlung arbeitenden Unkrautvernichter, mit einer Brennkammer, für einen Brennstoff und eine Wärmeabstrahlfläche.

Pflanzen, die einer Wärmestrahlung ausgesetzt werden, erreichen bei einer Grenztemperatur oberhalb von 80° eine irrversible Hitzeschädigung und sterben innerhalb weniger Tage ab, da bei dieser Grenztemperatur die Organell-Membranen der Pflanze platzen.

Ein Unkrautvernichter gemäß dem Oberbegriff des Anspruchs 1, der mit Wärmestrahlung arbeitet, ist bereits z.B. durch CH-A- 663319 bekannt und wird für die Vernichtung von Unkraut auf Gehwegen, Straßenrändern, Sportplätzen od. dgl. eingesetzt. Dieser Unkrautvernichter weist einen Brennstoffbehälter für ein Gas, ein von Hand schiebbares Fahrgestell, eine an dem Fahrgestell befestigte Brennkammer mit einem Brenner und einer Austrittsöffnung für die Wärmestrahlung, ein in der Brennkammer befindliches Mangangitter und eine Brennstoffversorgungsleitung auf, um den Brennstoffbehälter mit dem Brenner zu verbinden. Zur Unkrautvernichtung wird das im Brennstoffbehälter befindliche Gas im Brenner verbrannt und dadurch das in der Brennkammer befindliche Mangangitter auf 900° erhitzt. Bei dieser Temperatur sendet das Mangangitter eine Infrarotstrahlung aus, die durch die Austrittsöffnung auf das zu vernichtende Unkraut trifft. Auf diese Weise kann mit dem Überstreichen der zu bestrahlenden Fläche mit dem schiebbaren Fahrgestell das Unkraut durch Infrarotbestrahlung vernichtet werden. Dieser Unkrautvernichter ist jedoch, wegen seiner aufwendigen Konstruktion und aufgrund des verwendeten Edelmetalls Mangan, sehr teuer. Der Erfindung liegt die Aufgabe zugrunde, einen einfacheren Unkrautvernichter anzugeben.

Diese Aufgabe wird ausgehend vom Oberbegriff des Anspruchs 1 mit dessen kennzeichnenden Merkmalen gelöst.

Der vorliegenden Erfindung liegt die Erkenntnis zugrunde, daß mit einem angeblasenen Festbrennstoff sehr hohe Strahlungsleistungen erreichbar sind, und daß das elektrisch beheizte Gebläse ein ansonsten aufwendiges Zünden des Festbrennstoffes überflüssig macht.

Ein weiterer Vorteil der Erfindung liegt darin, daß mit der Ausgestaltung der Brennkammer, die den zur Erzeugung des Wärmestromes notwendigen Brennstoff, wie z.B. Braunkohle, Holzkohle oder Steinkohle aufnimmt, die Brennstoffversorgung im Unkrautvernichter integriert ist und damit die Handhabung aufgrund ihres geringen Gewichtes und ihrer kompakten Bauweise leichter ist. Ferner wird durch die Verwendung des obengenannten Brennstoffes auch die Handhabung des Unkrautvernichters sicherer, da nicht die Gefahr einer Fremdentzündung, wie bei Gas, besteht. Außerdem ist der Brennstoff wesentlich unproblematischer in seiner Lagerung.

Die bevorzugte Ausführungsform nach Anspruch 2 hat den Vorteil, daß mit dem Brennstoffvorratsbehälter ein Brennstoffvorrat mitgeführt werden kann, der auf einfache Weise über die kommunizierende Öffnung in die Brennkammer gefördert wird.

Die Weiterbildung nach Anspruch 3 hat den Vorteil, daß durch die Anordnung des Brennstoffvorratsbehälters über der Brennkammer, der durch die Brennstoffrückhalteeinrichtung gehaltene Brennstoff aufgrund seines eigenen Gewichtes immer nachrutscht, wenn der Brennstoff verbrennt.

Die Weiterbildung nach Anspruch 4 hat den Vorteil, daß die Wärmebestrahlung des Unkrautes besser kontrolliert werden kann, wenn die abgasfreigebende Öffnung nicht am Brennkammerboden, sondern an der Seite der Brennkammer vorgesehen ist, und daß der Wärmestrahlungsdurchfluß verbessert wird, wenn der Luftaustrittskanal auf der der Öffnung gegenüberliegenden Seite in die Brennkammer einmündet.

Die Weiterbildung nach Anspruch 5 hat den Vorteil, daß das Austrittsgitter eventuelle Brennstoffreste bis zur vollständigen Verbrennung zurückhält.

Die Weiterbildung nach Anspruch 6 hat den Vorteil, daß mit dem Abstandshalter ein gleichbleibender Abstand zwischen dem Boden und der die Abgase frei gebenden Öffnung eingehalten wird.

Die Weiterbildung nach Anspruch 7 hat den Vorteil, daß mit der Haltevorrichtung das daran befestigte elektrisch beheizte Gebläse mit der Brennkammer nicht über dem Boden getragen werden muß, sondern über den Boden geschoben werden kann.

Die Weiterbildung nach Anspruch 8 hat den Vorteil, daß mit dem Anbringen eines Rohrstutzens an der Brennkammer das Gebläse von der Brennkammer getrennt werden kann, und daß mit der Verwendung einer handelsüblichen Heißluftpistole als Gebläse sogar ein Brennstoff mit einem hohen Flammenpunkt, bei dem sich der Brennstoff entzündet, verwendet werden kann.

Im folgenden wird ein Ausführungsbeispiel der Erfindung anhand einer Zeichnung, die den Unkrautvernichter zeigt, näher erläutert.

Der Unkrautvernichter setzt sich aus einer Heißluftgebläsehalterung 1, die an einem Ende einen Klemmring 2 und am anderen Ende ein drehbar gelagertes Rad 3 aufweist, einer elektrischen Heißluftpistole 4, die mit ihrem Gebläselauf am Klemmring 2 befestigt ist, und einem Wärmestrahler 5 zusammen. Der Wärmestrahler

2

5 setzt sich aus einem zylinderförmigen Brennstoffvorratsbehälter 6 und einem zylinderförmigen Heißluftkanal 7 zusammen, welche sich in einer zylinderförmigen Brennkammer 8 des Wärmestrahlers 5 unter einem vorbestimmten Winkel 9 vereinigen. Die Brennkammer 8 ist koaxial zum Brennstoffvorratsbehälter 6 angeordnet, und die Symmetrielinie 10 des Brennstoffvorratsbehälters 6 schneidet die Symmetrielinie 11 des Heißluftkanals 7 unter dem vorbestimmten Winkel 9. Zur Stabilisierung des Heißluftkanals 7 ist dieser über einen keilförmigen Steg 12 mit dem Brennstoffvorratsbehälter 6 verbunden. Den oberen Abschluß des Brennstoffvorratsbehälters 6 bildet ein hermetisch dicht schließender Verschluß 13. Der Brennstoffvorratsbehälter 6 weist beim Übergang in die Brennkammer 8 eine Brennstoffrückhalteeinrichtung 14 auf, mit der ein Brennstoff 15 im Brennstoffvorratsbehälter 6 fixiert wird. Die Brennkammer 8 weist auf ihrer Stirnseite eine Austrittsöffnung 16 für den Austritt eines Heißluftstromes auf, die mit einem Austrittsgitter 17 abgeschlossen ist. Am Boden der Brennkammer 8 ist von außen ein Abstandshalter 18 angeordnet. Die Brennstoffrückhalteeinrichtung 14 besteht aus mindestens zwei an der Innenseite des Brennstoffvorratsbehälters 6 angeordneten Vorsprüngen, wobei der eine sich radial zur Symmetrielinie 10 des Brennstoffvorratsbehälters 6 erstreckt und der andere, ausgehend vom Vereinigungspunkt des Brennstoffvorratsbehälters 6 und des Heißluftkanals 7, parallel zur Symmetrielinie des Heißluftkanals verläuft, wobei der Vereinigungspunkt in einem vorbestimmten Abstand über dem sich radial zur Symmetrielinie 10 erstreckenden Vorsprung liegt. Die Brennstoffrückhalteeinrichtung 14 kann noch weitere, sich radial zur Symmetrielinie 10 erstreckende Vorsprünge aufweisen, die am Umfang symmetrisch verteilt sind, oder aber der sich radial zur Symmetrielinie 10 erstreckende Vorsprung ist als Ring ausgebildet. Das Ende des Heißluftkanals 7 ist entsprechend der Form einer Austrittsdüse 19 des Heißluftgebläses 4 ausgebildet.

Neben dieser Ausführungsform ist es auch möglich, daß der Wärmestrahler nur einen in die Brennkammer einmündenden Heißluftkanal aufweist, und die Brennkammer zur Abgabe des Heißluftstromes eine Austrittsöffnung an der Heißluftkanalzuführung gegenüberliegenden Brennkammerseite aufweist. Bei dieser nicht dargestellten Ausführungsform des Unkrautvernichters liegt der Brennstoff in der Brennkammer.

Im folgenden wird die Wirkungs- und Funktionsweise des Unkrautvernichters näher erläutert. Zunächst wird der Gebläselauf der elektrischen Heißluftpistole 4 durch den Klemmring 2 der Heißluftgebläsehaltung 1 geschoben und damit gleichzeitig die Heißluftpistole 4 am Klemmring 2 fixiert. Anschließend wird das Ende des Heißluftkanals 7 auf die Austrittsdüse 19 der Heißluftpistole 4 gesteckt. Damit steht der Unkrautvernichter mit dem Rad 3 und dem Gleitschuh 18 auf dem Boden und kann entweder mit einem Griff 20 der Heißluftpistole 4 oder mit einer an der Heißluftgebläsehalterung 1 befestigten Führungsstange 21 über den Boden geschoben werden. Zum Einfüllen des Brennstoffes in den Brennstoffvorratsbehälter 6 wird der Verschluß 13 vom Brennstoffvorratsbehälter 6 entfernt und der Brennstoff 15 in den Brennstoffvorratsbehälter 6 eingeführt. Anschließend wird der Verschluß 13 am oberen Ende des Brennstoffvorratsbehälters 6 angebracht. Dadurch, daß der Brennstoff 15 einen kleineren Durchmesser wie der Brennstoffvorratsbehälter 6 und einen größeren Durchmesser wie die Brennstoffrückhalteeinrichtung 14 aufweist und an seinen Enden abgeflacht ist, wird der Brennstoff 15 von der Brennstoffrückhalteeinrichtung 14 gehalten, wobei das abgeflachte Ende in die Brennkammer 6 ragt. Zur Erzeugung des Wärmestromes wird die Heißluftpistole 4 mit ihrem Schalter 22 eingeschaltet und die Temperatur des Heißluftstromes mit dem Temperaturregler 23 eingestellt. Dadurch tritt an der Austrittsdüse 19 die Heißluft mit der eingestellten Temperatur, z.B. 600°, aus. Die Heißluft wird durch den Heißluftkanal 7 in die Brennkammer 8 geführt, wobei sie den in die Brennkammer 8 ragenden Brennstoff 15 an seinem Ende anbläst. Durch das Anblasen des Brennstoffes 15 erhitzt sich dieser über seinen Flammenpunkt und entzündet sich. Mit dem Entzünden des Brennstoffes 15 erhöht sich die Temperatur des Heißluftstromes von 600° auf 1300°. Durch die Austrittsöffnung 16 in der Brennkammer 8 strömt die Heißluft nach außen, wobei das Austrittsgitter 17 eventuell entstehende Brennstoffreste zurückhält, jedoch den Heißluftstrom nur wenig behindert. Durch die Ausbildung der Brennstoffrückhalteeinrichtung 14 rutscht der Brennstoff 15 aufgrund seines eigenen Gewichtes während des Abbrandes nach, wobei der vorbestimmte Winkel 9 zwischen dem Brennstoffvorratsbehälter 6 und dem Heißluftkanal 7 den geregelten Abbrand des Brennstoffes 15 entscheidend beeinflußt. Der hermetisch dichtschließende Verschluß 13 am oberen Ende des Brennstoffvorratsbehälters 6 ist dafür vorgesehen, daß nicht der ganze Brennstoff 15, sondern nur der in die Brennkammer 8 ragende Teil entzündet wird. Für den Brennstoff kann z.B. gepreßte Braunkohle, Holzkohle oder Steinkohle verwendet werden. Nachdem die an der Austrittsöffnung 16 austretende Heißluft die Temperatur von 1300° erreicht hat, kann der Unkrautvernichter eingesetzt werden, indem der Unkrautvernichter über das zu vernichtende Unkraut hinweggeschoben wird, wobei der Abstandshalter 18 einen gleichbleibenden Abstand zwischen der Austrittsöffnung 16 und dem Boden gewährleistet.

Das beschriebene Gerät läßt sich selbstverständlich nicht nur zum Vernichten von Unkraut einsetzen, sondern ganz allgemein überall dort wo hohe Infrarotstrahlungsleistungen gebraucht werden. Beispielsweise lassen sich damit leicht Ölflecken auf gepflasterten oder betonierten Parkplatzflächen entfernen, die bekanntlich auch aggressiven Chemikalien hartnäckigen Widerstand leisten. Auch Farbstoffe oder angeklebte Kaugummis sind mühelos entfernbar. Es ist insbesondere auch einsetzbar, um Asphalt oberflächlich aufzuschmelzen, um beispielsweise Zebrastreifen einzulassen oder auch um Material ganz allgemein schnell auszutrocknen, aufzuschmelzen oder auszuhärten.

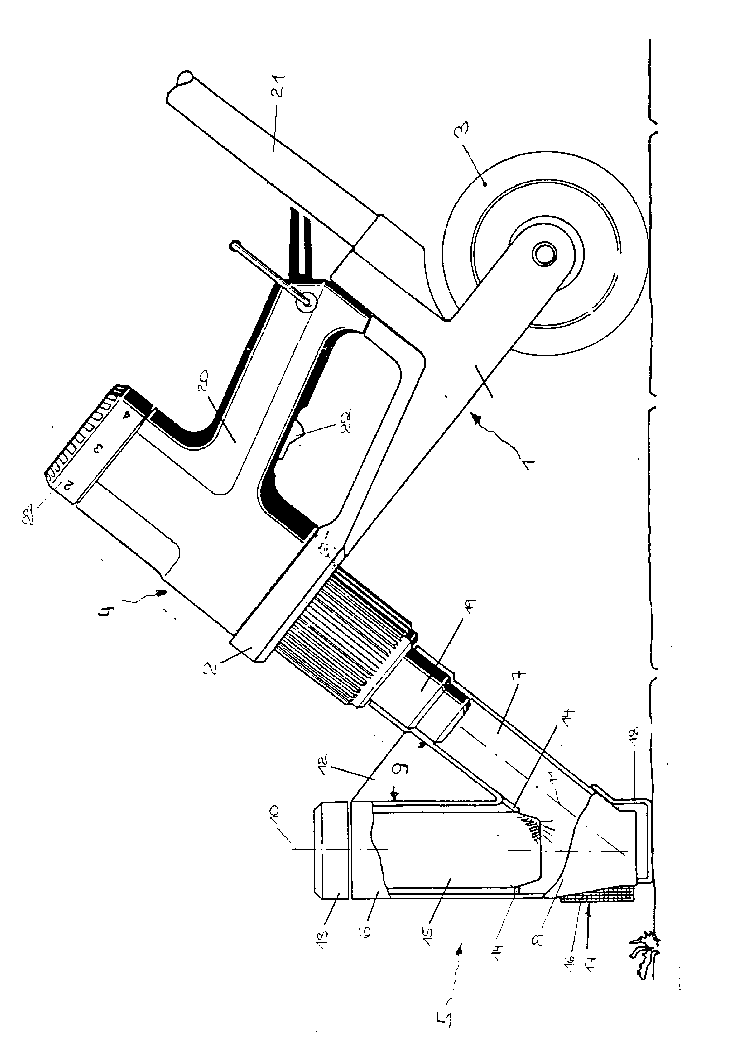

**Patentansprüche**

1. Mit Wärmestrahlung arbeitender Unkrautvernichter, mit einer Brennkammer für einen Brennstoff und einer Wärmeabstrahlfläche, **dadurch gekennzeichnet,** daß die Brennkammer (8) für einen festen Brennstoff (15) ausgebildet ist, und daß ein elektrisch beheiztes Gebläse (4) vorgesehen ist, dessen Luftaustrittskanal (7) in die Brennkammer (8) mündet.

2. Unkrautvernichter nach Anspruch 1, **gekennzeichnet durch** einen Brennstoffvorratsbehälter (6), der eine mit der Brennkammer (8) kommunizierende Öffnung hat.

3. Unkrautvernichter nach Anspruch 2, **dadurch gekennzeichnet,** daß der Brennstoffvorratsbehälter (6) über der Brennkammer (8) angeordnet ist, und daß eine Brennstoffrückhalteeinrichtung (14) vorgesehen ist.

4. Unkrautvernichter nach einem der Ansprüche 1 bis 3, **dadurch gekennzeichnet,** daß die Brennkammer (8) unten geschlossen ist, daß sie seitlich eine die Abgase freigebende Öffnung (16) aufweist, und daß der Luftaustrittskanal (7) des elektrisch beheizten Gebläses (4) auf der dieser Öffnung (16) gegenüberliegenden Seite in die Brennkammer (8) einmündet.

5. Unkrautvernichter nach Anspruch 4, **dadurch gekennzeichnet,** daß die Öffnung (16) ein Gitter (15) aufweist.

6. Unkrautvernichter nach einem der Ansprüche 1 bis 5, **dadurch gekennzeichnet,** daß die Brennkammer (8) an ihrer unteren Seite einen Abstandshalter (18) aufweist.

7. Unkrautvernichter nach einem der Ansprüche 1 bis 6, **dadurch gekennzeichnet,** daß eine Haltevorrichtung (1) vorgesehen ist, die an ihrem unteren Ende mindestens ein Rad (3) und an ihrem oberen Ende einen Ring zur Befestigung des elektrisch beheizten Gebläses (4) aufweist.

8. Unkrautvernichter nach einem der Ansprüche 1 bis 7, **dadurch gekennzeichnet,** daß an der Brennkammer (8) ein Rohrstutzen (7) angebracht ist, daß das elektrisch beheizte Gebläse (4) als handelsübliche Heißluftpistole (4) ausgebildet ist, und daß diese Heißluftpistole (4) auf dem Rohrstutzen (7) aufgesteckt ist.

**Claims**

1. Weed eradicator operating by heat radiation, having a combustion chamber for a fuel and a heat-radiating surface, characterised in that the combustion chamber (8) is designed for a solid fuel (15) and in that an electrically heated fan (4) is provided, the air outlet duct (7) of which opene out into the combustion chamber (8) .

2. Weed eradicator according to Claim 1, characterised by a fuel storage tank (6) which has an opening communicating with the combustion chamber (8).

3. Weed eradicator according to Claim 2, characterised in that the fuel storage tank (6) is disposed above the combustion chamber (8) and in that a fuel retaining mechanism (14) is provided.

4. Weed eradicator according to one of Claims 1 to 3, characterised in that the combustion chamber (8) is closed at the bottom, in that it exhibits on its side an opening (16) which discharges the exhaust gases and in that the air outlet duct (7) of the electrically heated fan (4) opene out into the combustion chamber (8) on the side opposite this opening (16).

5. Weed eradicator according to Claim 4, characterised in that the opening (16) exhibits a grille (15).

6. Weed eradicator according to one of Claims 1 to 5, characterised in that the combustion chamber (8) exhibite on its bottom side a epacer (18).

7. Weed eradicator according to one of Claims 1 to 6, characterised in that there is provided a holding device (1) which, at its bottom end, exhibits at least one wheel (3) and, at its top end, a ring for securing the electrically heated fan (4).

8. Weed eradicator according to one of Claims 1 to 7, characterised in that there is fitted to the combustion chamber (8) a pipe socket (7), in that the electrically heated fan (4) is configured as a commercially available hot-air gun (4) and in that this hot-air gun (4) is mounted on the pipe socket (7).

**Revendications**

1. Désherbeur fonctionnant par rayonnement thermique, comprenant une chambre de combustion pour un combustible et une surface radiante, caractérisé en ce que la chambre de combustion (8) est conçue pour un combustible solide (15) et en ce qu'il est prévu un ventilateur (4) chauffé électriquement dont la canal de sortie d'air (7) débouche dans la chambre de combustion (8).

2. Désherbeur selon la revendication 1, caractérisé par un réservoir de combustible (6) qui possèdde une ouverture communiquant avec la chambre de combustion (8).

3. Désherbeur selon la revendication 2, caractérisé en ce que le réservoir de combustible (6) est disposé au-dessus de la chambre de combustion (8) et en ce qu'un dispositif de retenue de combustible (14) est prévu.

4. Désherbeur selon l'une des revendications 1 à 3, caractérisé en ce que la chambre de combustion (8) est fermée en bas, en ce qu'elle présente latéralement une ouverture (16) libérant les gaz de combustion et en ce que le canal de sortie d'air (7) du ventilateur (4) chauffé électriquement débouche dans la chambre de combustion (8) sur le côté opposé à cette ouverture (16).

5. Désherbeur selon la revendication 4, caractérisé en ce que l'ouverture (16) présente une grille (15).

6. Désherbeur selon l'une des revendications 1 à 5, caractérisé en ce que la chambre de combustion (8) présente un dispositif d'écartement (18) sur son côté inférieur.

7. Désherbeur selon l'une des revendications 1 à 6, caractérisé en ce qu'il est prévu un dispositif de maintien (1) qui présente à son extrémité inférieure au moins une roue (3) et à son extrémité supérieure une bague pour fixer le ventilateur (4) chauffé éléctriquement.

8. Désherbeur selon l'une des revendications 1 à 7, caractérisé en ce qu'une tubulure (7) est montée sur la chambre de combustion (8), en ce que le ventilateur (4) chauffé électriquement est réalisé sous forme de pistolet d'air chaud (4) couramment commercialisé et en ce que ce pistolet d'air chaud (4) est emboîté sur la tubulure (7).